# EUROPEAN PATENT APPLICATION

(11) **EP 3 637 677 A1**
(43) Date of publication of application: **15.04.2020**
(21) Application number: 18812978.7
(22) Date of filing: 05.06.2018
(51) Int. Cl.: H04L 12/14, H04W 4/24, H04M 15/00

(54) **PHONE BILL GENERATION METHOD, DEVICE, MOBILE EDGE PLATFORM AND STORAGE MEDIUM**

(30) Priority: 08.06.2017 CN 201710437344
(71) Applicant: ZTE Corporation, Shenzhen, Guangdong 518057 (CN)
(72) Inventor: HUANG, Qiang, Shenzhen Guangdong 518057 (CN); FANG, Yonggang, Shenzhen Guangdong 518057 (CN)
(74) Representative: Aipex B.V.
(86) International application number: PCT/CN2018/089900
(87) International publication number: WO 2018/223944

(57) **Abstract**

The present invention provides a bill generation method and device, a mobile edge platform and a storage medium. The method includes: a charging service entity acquires a consumption record and charging policy configuration information, where the consumption record includes at least one of: a resource and a service on a mobile edge computing (MEC) platform used by a user terminal on the MEC on which the charging service entity is located, or a resource and a service on the MEC platform used by an application instance on the MEC platform on which the charging service entity is located; and the charging service entity generates a charging bill based on the consumption record and the charging policy configuration information.

## Description

### CROSS-REFERENCES TO RELATED APPLICATIONS

This application claims priority to a Chinese patent application No. 201710437344.2 filed on June 8, 2017, disclosure of which is incorporated herein by reference in its entirety.

### TECHNICAL FIELD

The present invention relates to, but is not limited to, the field of communications and, in particular, to a bill generation method and device, a mobile edge platform and a storage medium.

### BACKGROUND

The mobile communication has evolved rapidly, and permeated into various aspects of work, social contact and life of people, bringing huge influence on various aspects of lifestyle and working mode of people, social politics, economy and the like. Since human society enters the information era, service application demands of various aspects have shown explosive growth, and a future mobile network will provide not only services for communications between people, but also a wide range of services for a wide variety of Internet of Things devices. For services with ultrahigh-speed service demands such as virtual reality, high-definition video and the like, the speed may reach 10 to 100 times of the existing speed; for services with low-delay service demands such as the Internet of Vehicle and the like, an end-to-end delay may be shortened by 5 times; and the Internet of Things may access services which are 1,000 times of the existing services, and the service life of the battery may be extended to 10 times of the existing service life.

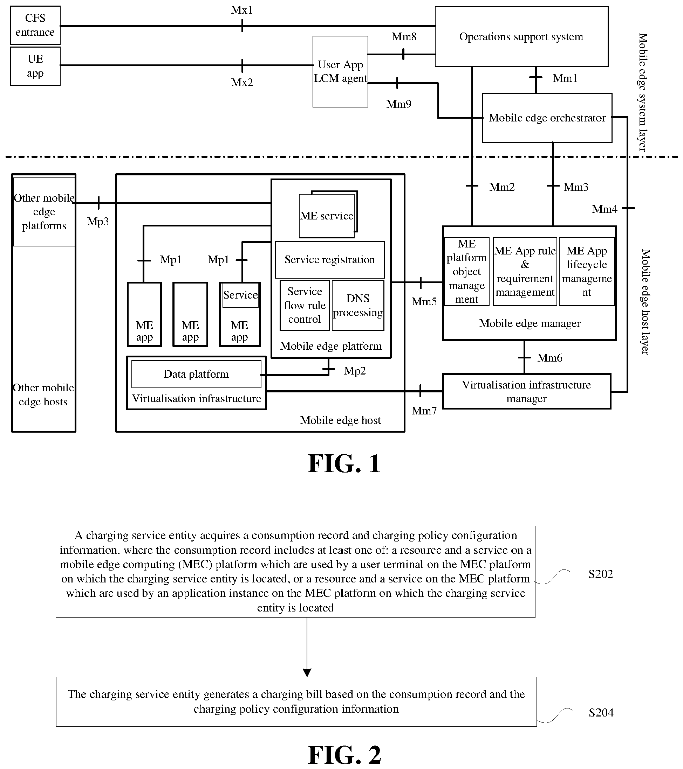

With the growth of low-delay and high-bandwidth services, an application (App) deployment as a bearer service is also getting closer to a user equipment (UE), which can not only shorten the delay but also save transmission bandwidth, that is, the edge computing growing vigorously now. At present, the European Telecommunication Standards Institute (ETSI) mobile edge computing (MEC) platform defines architecture of the edge computing. FIG. 1 is an architecture diagram of the ESTI MEC in the related art. As shown in FIG. 1, this architecture includes:
a mobile edge orchestrator, which is responsible for selecting a mobile edge host, loading an application, and triggering initialization and termination of an application instance;
an operations support system, which is responsible for authorizing a request between the UE and a third-party customer, switching to the mobile edge orchestrator, and preforming operation and maintenance;
a user application lifecycle management proxy (User App LCM proxy), which allows the UE to request an operation such as loading an instance, terminating an instance, and notifies the UE of a running state of the corresponding application instance;
a customer facing service portal (CFS portal), which allows the third-party customer to choose to subscribe to a set of mobile edge applications;
a mobile edge manager, which manages a lifecycle of an application, manages rules and requirements of the application, and receives an error report and measurement of a virtualisation infrastructure;
a virtualisation infrastructure manager, which allocates, manages and releases a virtualisation resource, and collects and reports error information about the performance of the virtualisation resource;
a mobile edge host, which includes a mobile edge platform and a virtualisation infrastructure, where a mobile edge application operates on the virtualisation infrastructure;
a mobile edge platform, which collects necessary operational information for the mobile edge application and provides a mobile edge service;
a mobile edge application, which is an application instantiated on the mobile edge host based on the virtualisation infrastructure; and
a user equipment application, which interacts with the mobile edge computing platform through the User App LCM proxy.

Under this architecture, the mobile edge host deployed close to a user can deploy the App and offload UE's application data to a local App, so as to provide services for the UE. However, for edge computing consumption, the ETSI MEC does not provide a charging function, and the operator needs the charging function to provide the MEC service.

### SUMMARY

In view of the above, embodiments of the present invention intend to provide a bill generation method and device, a mobile edge platform and a storage medium to at least solve the problem in the related art that the ETSI MEC cannot perform charging.

The embodiments of the present invention provide a bill generation method. The method includes: acquiring, by a charging service entity, a consumption record and charging policy configuration information, where the consumption record includes at least one of: a resource and a service on an MEC platform used by a user terminal on the MEC on which the charging service entity is located, or a resource and a service on the MEC platform used by an application instance on the MEC platform on which the charging service entity is located; and generating, by the charging service entity, a charging bill based on the consumption record and the charging policy configuration information.

The embodiments of the present invention further provide a bill generation device. The device is located on a mobile edge platform and includes: an acquisition module, which is configured to acquire a consumption record and charging policy configuration information, where the consumption record includes at least one of: a resource and a service on an MEC platform used by a user terminal on the MEC platform on which the charging service entity is located, or a resource and a service on the MEC platform used by an application instance on the MEC platform on which the charging service entity is located; and a generation module, which is configured to generate a charging bill based on the consumption record and the charging policy configuration information.

The embodiments of the present invention further provide a mobile edge platform. The mobile edge platform includes: a processor, which is configured to acquire a consumption record and charging policy configuration information and generate a charging bill based on the consumption record and the charging policy configuration information, where the consumption record includes at least one of: a resource and a service on an MEC platform used by a user terminal on the MEC platform on which the charging service entity is located, or a resource and a service on the MEC platform used by an application instance on the MEC platform on which the charging service entity is located; and a memory, which is coupled to the processor and is configured to store a program for bill generation.

The embodiments of the present invention further provide a storage medium. The storage medium includes a stored program which, when executed, executes the bill generation method described above.

The embodiments of the present invention further provide a processor. The processor is configured to execute a program which, when executed, executes the bill generation method described above.

The embodiments of the present invention further provide a bill generation device. The bill generation device includes:
a memory, which is configured to store a program for bill generation; and
a processor, which is configured to execute the program which, when executed, executes the bill generation method described above.

By applying the bill generation method and device, the mobile edge platform and the storage medium provided by the embodiments of the present invention, by adding a charging service entity, a resource and a service on an MEC platform used by an MEC platform user terminal and/or a resource and a service on the MEC platform used by an application instance are charged through the added charging service entity, thereby implementing a charging function in the ETSI MEC. Therefore, the problem in the related art that the ETSI MEC cannot perform charging can be solved.

### BRIEF DESCRIPTION OF DRAWINGS

FIG. 1 is an architecture diagram of ESTI MEC in the related art;
FIG. 2 is a flowchart of a bill generation method according to an embodiment of the present invention;
FIG. 3 is a flowchart of a method for a charging service to acquire a charging policy according to an embodiment of the present invention;
FIG. 4 is a flowchart of a method for reporting a charging bill according to an embodiment of the present invention;
FIG. 5 is a structural block diagram of a bill generation device according to an embodiment of the present invention;
FIG. 6 is a structural block diagram of a mobile edge platform according to an embodiment of the present invention; and
FIG. 7 is a schematic diagram of a mobile edge platform according to an embodiment of the present invention.

### DETAILED DESCRIPTION

The present invention will be described hereinafter in detail with reference to the drawings in conjunction with embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence.

An embodiment of the present invention adds a charging service entity in MEC architecture shown in FIG. 1. The charging service entity is configured to implement a charging function in the MEC architecture. In one embodiment, the charging service entity is located in a mobile edge platform in the architecture shown in FIG. 1. Based on the MEC architecture added with the charging service entity, an embodiment of the present invention provides a bill generation method. FIG. 2 is a flowchart of a bill generation method according to an embodiment of the present invention. As shown in FIG. 2, the method incudes steps described below.

In step S202, a charging service entity acquires a consumption record and charging policy configuration information, where the consumption record includes at least one of: a resource and a service on an MEC platform used by a user terminal on the MEC platform on which the charging service entity is located, or a resource and a service on the MEC platform used by an application instance on the MEC platform on which the charging service entity is located.

In step S204, the charging service entity generates a charging bill based on the consumption record and the charging policy configuration information.

Through the above steps, by adding a charging service entity, a resource and a service on an MEC platform used by an MEC platform user terminal and/or a resource and a service on the MEC platform used by an application instance are charged through the added charging service entity, thereby implementing the charging function in the ETSI MEC. Therefore, the problem in the related art that the ETSI MEC cannot perform charging can be solved.

It is to be noted that the above charging service entity may be located in each platform on the above MEC platform, and in one embodiment of the present invention, the charging service entity is located on a mobile edge platform of the MEC platform.

It is to be noted that the above MEC platform includes platforms including the mobile edge orchestrator, the mobile edge manager, the mobile edge host and the virtualisation infrastructure shown in FIG. 1; and the mobile edge platform is an entity on the mobile edge host and is configured to provide an edge computing service and user application service registration, but it is not limited to thereto.

In one embodiment, the above step S202 may be presented as: counting, by the charging service entity, the consumption record; and acquiring, by the charging service entity, the charging policy configuration information from a mobile edge manager on the MEC platform, where the charging policy configuration information includes at least one of: identification information of the user terminal, identification information of the application instance, a first charging policy for computing a fee corresponding to the resource and the service on the MEC platform used by the user terminal, or a second charging policy for computing a fee corresponding to the resource and the service on the MEC platform used by the application instance.

In one embodiment, the step of acquiring, by the charging service entity, the charging policy configuration information from the mobile edge manager on the MEC platform can include: sending, by the charging service entity, request information for acquiring the charging policy configuration information to the mobile edge manager, and receiving, by the charging service entity, the charging policy configuration information returned by the mobile edge manager based on the request information.

In one embodiment, the interaction between the charging service entity and the mobile edge manager may be implemented through an Mm5 interface. For example, the step of sending, by the charging service entity, the request information for acquiring the charging policy configuration information to the mobile edge manager may be presented as: sending, by the charging service entity, the request information to the mobile edge manager through the Mm5 interface.

In one embodiment, after the step S204, the method may further include: reporting, by the charging service entity, the charging bill to the mobile edge manager on the MEC platform.

In one embodiment, after the charging service entity reports the charging bill to the mobile edge manager on the MEC platform, the method may further include: receiving, by the charging service entity, a charging bill reporting confirmation message returned by the mobile edge manager and used for indicating that the charging service entity has received the charging bill, where the charging bill reporting confirmation message carries at least one of following information: identification information of the user terminal, or identification information of the application instance.

In one embodiment, the resource may include at least one of: a central processing unit (CPU), a storage space, a lifetime of the application instance, or network traffic; and the service may include at least one of: the number of times for the service being invoked, or a length of time for the service being invoked.

In one embodiment, in a case where the resource includes the CPU, the resource may be presented as a usage frequency or usage duration of the CPU, but it is not limited to thereto. It is to be noted that the lifetime of the application instance may be presented as time from starting time to ending time of the application instance, but it is not limited thereto.

In one embodiment, in a case where the consumption record includes the resource and the service used by the user terminal, the charging bill may include a charging bill for the user terminal (e.g., a charging bill at a user terminal level); and in a case where the consumption record includes the source and the service used by the application instance, the charging bill includes a charging bill for the application instance (e.g., a charging bill at an application level), that is, the charging bill may include the charging bill at the user terminal level and the charging bill at the application level.

In one embodiment, the first charging policy includes at least one of: a charging policy for computing a fee corresponding to the service used by the user terminal, or a charging policy for computing a fee corresponding to the resource used by the user terminal; and the second charging policy includes at least one of: a charging policy for computing a fee corresponding to the service used by the application instance, or a charging policy for computing a fee corresponding to the resource used by the application instance.

In one embodiment, the charging policy for computing the fee corresponding to the resource used by the user terminal includes at least one of: a charging policy for computing a fee corresponding to a CPU used by the user terminal, a charging policy for computing a fee corresponding to a storage space used by the user terminal, or a charging policy for computing a fee corresponding to network traffic used by the user terminal; and the charging policy for computing the fee corresponding to the resource used by the application instance includes at least one of: a charging policy for computing a fee corresponding to a CPU used by the user terminal application instance, a charging policy for computing a fee corresponding to a storage space used by the application instance, a charging policy for computing a fee corresponding to network traffic used by the application instance, or a charging policy for computing a fee corresponding to a lifetime of the application instance.

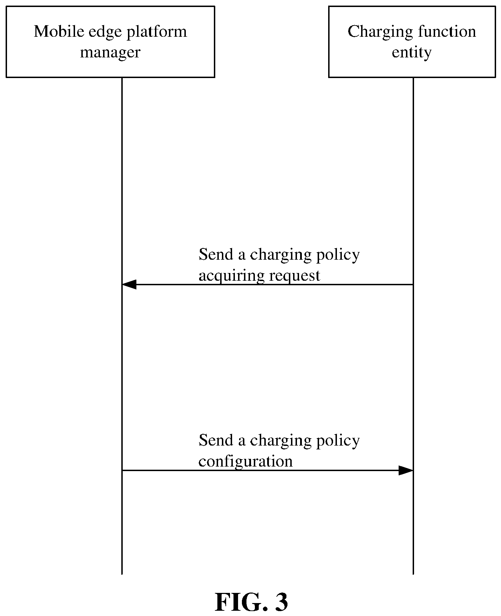

An embodiment of the present invention provides a method for a charging service (e.g., the charging service entity) to acquire a charging policy. FIG. 3 is a flowchart of a method for a charging service to acquire a charging policy according to an embodiment of the present invention. As shown in FIG. 3, the method includes steps described below.

A charging function entity sends a charging policy acquiring request to a mobile edge platform manager, where the request includes a UE ID or an application ID.

The mobile edge platform manager sends a charging policy configuration to the charging function entity through the Mm5 interface, where the charging policy configuration includes the UE ID or the application ID, and a charging policy. The charging policy may include, but is not limited to, a service invoking charging policy, a computing resource charging policy, and an APP instance starting and ending time charging policy.

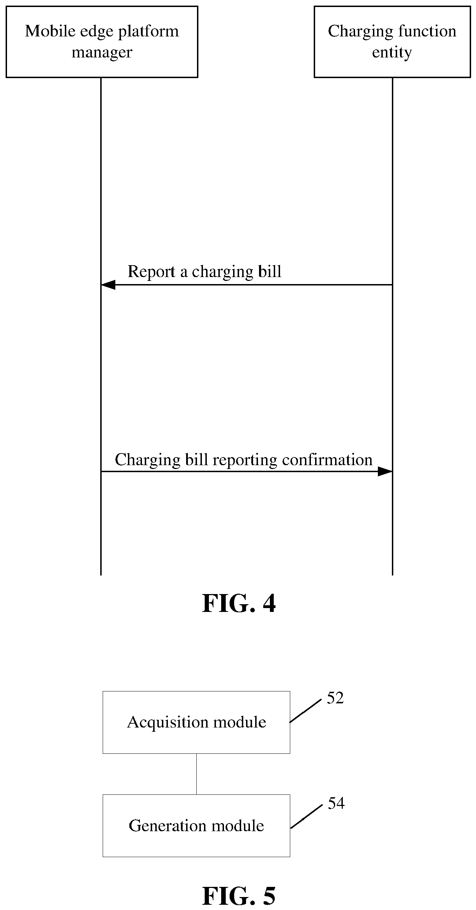

An embodiment of the present invention further provides a method for reporting a charging bill. FIG. 4 is a flowchart of a method for reporting a charging bill according to an embodiment of the present invention. As shown in FIG. 4, the method includes the steps described below.

A charging function entity reports a charging bill to a mobile edge platform manager through the Mm5 interface, where the bill content includes the UE ID or the application ID, and related charging results such as CPU usage, storage space usage, APP instance starting and ending time, network transmission usage, the number of times for the service being invoked and a length of time for the service being invoked.

The mobile edge platform manager sends charging bill reporting confirmation to the charging function entity through the Mm5 interface.

From the description of the above embodiment, it will be apparent to those skilled in the art that the method in the embodiments described above may be implemented by software plus a necessary general-purpose hardware platform, or may of course be implemented by hardware. However, in many cases, the former is a preferred implementation manner. Based on this understanding, the technical solution of the present invention substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device or the like) to execute the method according to each embodiment of the present invention.

An embodiment of the present invention further provides a bill generation device. The device is configured to implement the bill generation method provided in the embodiments of the present invention. What has been described will not be repeated. As used below, the term "module" may be software, hardware or a combination thereof capable of implementing predetermined functions. The device described below in the embodiments is implemented by software, but implementation by hardware or by a combination of software and hardware is also possible and conceived.

FIG. 5 is a structural block diagram of a bill generation device according to an embodiment of the present invention. As shown in FIG. 5, the device includes an acquisition module 52 and a generation module 54.

The acquisition module 52 is configured to acquire a consumption record and charging policy configuration information, where the consumption record includes at least one of: a resource and a service on an MEC platform used by a user terminal on the MEC platform on which a charging service entity is located, or a resource and a service on the MEC platform used by an application instance on the MEC platform on which the charging service entity is located.

The generation module 54 is connected to the acquisition module 52 and is configured to generate a charging bill based on the consumption record and the charging policy configuration information.

The above device can charge a resource and a service on an MEC platform used by an MEC platform user terminal and/or a resource and a service on the MEC platform used by an application instance, thereby implementing the charging function in the ETSI MEC. Therefore, the problem in the related art that the ETSI MEC cannot perform charging can be solved.

It is to be noted that the preceding device may, but may not necessarily, be located on the mobile edge platform.

In one embodiment, the acquisition module 52 can further be configured to: count the consumption record; and acquire the charging policy configuration information from a mobile edge manager on the MEC platform, where the charging policy configuration information includes at least one of: identification information of the user terminal, identification information of the application instance, or a charging policy for computing a fee corresponding to the resource and the service on the MEC platform used by the user terminal and/or the application instance.

In one embodiment, the acquisition module 52 is further configured to send request information for acquiring the charging policy configuration information to the mobile edge manager, and receive the charging policy configuration information returned by the mobile edge manager based on the request information.

In one embodiment, the device may further include a reporting module, which is connected to the generation module 54 and is configured to report the charging bill to the mobile edge manager on the MEC platform.

In one embodiment, the device may further include: a receiving module, which is connected to the reporting module and is configured to receive a charging bill reporting confirmation message returned by the mobile edge manager and used for indicating that the charging service entity has received the charging bill, where the charging bill reporting confirmation message carries at least one of following information: identification information of the user terminal, or identification information of the application instance.

In one embodiment, the interaction between the device and the mobile edge manager may, but is not limited to, be implemented through the Mm5 interface.

In one embodiment, the resource may include at least one of: a CPU, a storage space, a lifetime of the application instance, or network traffic; and the service may include at least one of: the number of times for the service being invoked, or a length of time for the service being invoked.

In one embodiment, in a case where the resource includes the CPU, the resource may be presented as a usage frequency or usage duration of the CPU, but it is not limited to thereto. It is to be noted that the lifetime of the application instance may be presented as time from starting time to ending time of the application instance, but it is not limited thereto.

In one embodiment, in a case where the consumption record includes the resource and the service used by the user terminal, the charging bill may include a charging bill for the user terminal (e.g., a charging bill at a user terminal level); and in a case where the consumption record includes the source and the service used by the application instance, the charging bill includes a charging bill for the application instance (e.g., a charging bill at an application level), that is, the charging bill may include the charging bill at the user terminal level and the charging bill at the application level.

In one embodiment, the first charging policy includes at least one of: a charging policy for computing a fee corresponding to the service used by the user terminal, or a charging policy for computing a fee corresponding to the resource used by the user terminal; and the second charging policy includes at least one of: a charging policy for computing a fee corresponding to the service used by the application instance, or a charging policy for computing a fee corresponding to the resource used by the application instance.

In one embodiment, the charging policy for computing the fee corresponding to the resource used by the user terminal includes at least one of: a charging policy for computing a fee corresponding to a CPU used by the user terminal, a charging policy for computing a fee corresponding to a storage space used by the user terminal, or a charging policy for computing a fee corresponding to network traffic used by the user terminal; and the charging policy for computing the fee corresponding to the resource used by the application instance includes at least one of: a charging policy for computing a fee corresponding to a CPU used by the user terminal application instance, a charging policy for computing a fee corresponding to a storage space used by the application instance, a charging policy for computing a fee corresponding to network traffic used by the application instance, or a charging policy for computing a fee corresponding to a lifetime of the application instance.

It is to be noted that the bill generation device may, but may not necessarily, be equivalent to the charging service entity in the above embodiments.

It is to be noted that the various modules described above may be implemented by software or hardware. Implementation by hardware may, but may not necessarily, be performed in the following manners: the various modules described above are located in the same processor, or the various modules described above are located in their respective processors in any combination form.

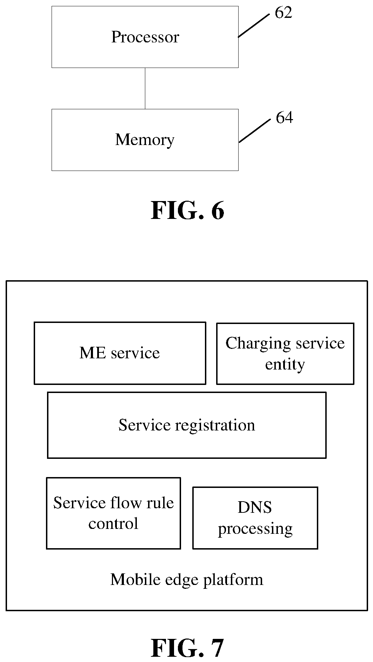

An embodiment of the present invention further provides a mobile edge platform. FIG. 6 is a structural block diagram of a mobile edge platform according to an embodiment of the present invention. As shown in FIG. 6, the mobile edge platform includes a processor 62 and a memory 64.

The processor 92 is configured to acquire a consumption record and charging policy configuration information, and generate a charging bill based on the consumption record and the charging policy configuration information, where the consumption record includes at least one of: a resource and a service on an MEC platform used by a user terminal on the MEC platform on which a charging service entity is located, or a resource and a service on the MEC platform used by an application instance on the MEC platform on which the charging service entity is located.

The memory 64 is coupled to the processor 62 and is configured to store a program for bill generation.

The above mobile edge platform can charge a resource and a service on an MEC platform used by an MEC platform user terminal and/or a resource and a service on the MEC platform used by an application instance, thereby implementing the charging function in the ETSI MEC. Therefore, the problem in the related art that the ETSI MEC cannot perform charging can be solved.

In one embodiment, the processor 62 can further be configured to: count the consumption record, and acquire the charging policy configuration information from a mobile edge manager on the MEC platform, where the charging policy configuration information includes at least one of: identification information of the user terminal, identification information of the application instance, or a charging policy for computing a fee corresponding to the resource and the service on the MEC platform used by the user terminal and/or the application instance.

In one embodiment, the processor 62 can further configured to send request information for acquiring the charging policy configuration information to the mobile edge manager, and receive the charging policy configuration information returned by the mobile edge manager based on the request information.

In one embodiment, the processor 62 is further configured to report the charging bill to the mobile edge manager on the MEC platform.

In one embodiment, the processor 62 is further configured to receive a charging bill reporting confirmation message returned by the mobile edge manager and used for indicating that the charging service entity has received the charging bill, where the charging bill reporting confirmation message carries at least one of following information: identification information of the user terminal, or identification information of the application instance.

In one embodiment, the interaction between the processor 62 and the mobile edge manager may, but is not limited to, be implemented through the Mm5 interface.

It is to be noted that the resource may include at least one of: a CPU, a storage space, a lifetime of the application instance, or network traffic; and the service may include at least one of: the number of times for the service being invoked, or a length of time for the service being invoked.

It is to be noted that in a case where the resource includes the CPU, the resource can be presented as a usage frequency or usage duration of the CPU, but it is not limited to thereto. It is to be noted that the lifetime of the application instance may be presented as time from starting time to ending time of the application instance, but it is not limited thereto.

It is to be noted that in a case where the consumption record includes the resource and the service used by the user terminal, the charging bill may include a charging bill for the user terminal (e.g., a charging bill at a user terminal level); and in a case where the consumption record includes the source and the service used by the application instance, the charging bill includes a charging bill for the application instance (e.g., a charging bill at an application level), that is, the charging bill may include the charging bill at the user terminal level and the charging bill at the application level.

It is to be noted that the first charging policy includes at least one of: a charging policy for computing a fee corresponding to the service used by the user terminal, or a charging policy for computing a fee corresponding to the resource used by the user terminal; and the second charging policy includes at least one of: a charging policy for computing a fee corresponding to the service used by the application instance, or a charging policy for computing a fee corresponding to the resource used by the application instance.

It is to be noted that the charging policy for computing the fee corresponding to the resource used by the user terminal includes at least one of: a charging policy for computing a fee corresponding to a CPU used by the user terminal, a charging policy for computing a fee corresponding to a storage space used by the user terminal, or a charging policy for computing a fee corresponding to network traffic used by the user terminal; and the charging policy for computing the fee corresponding to the resource used by the application instance includes at least one of: a charging policy for computing a fee corresponding to a CPU used by the user terminal application instance, a charging policy for computing a fee corresponding to a storage space used by the application instance, a charging policy for computing a fee corresponding to network traffic used by the application instance, or a charging policy for computing a fee corresponding to a lifetime of the application instance.

In one embodiment, the existing charging problem which the ETSI MEC does not solve is solved by introducing a charging service (which is equivalent to the bill generation device or the charging service entity) on the mobile edge platform of the mobile edge host.

FIG. 7 is a schematic diagram of a mobile edge platform according to an embodiment of the present invention. As shown in FIG. 7, compared with the mobile edge platform (as shown in FIG. 1) in the related art, in the mobile edge platform, a charging service is added. The charging service further includes a processor and a memory. The memory is coupled to the processor, and the processor is configured to execute steps described below.
(1) Resources and services on an edge computing platform consumed by a UE and an App instance on an MEC platform are counted.
   The count information includes, but is not limited to, CPU usage, storage space usage, App instance starting and ending time, network traffic, and duration and times for the service being invoked.
(2) Charging policies of the UE and the APP are acquired from a mobile edge platform manager through an Mm5 interface.
   The charging policy may include, but is not limited to, a service invoking charging policy, a computing resource charging policy, an APP instance starting and ending charging policy, and a traffic charging policy.
(3) Charging bills at the UE level and the APP level about resources and services on the edge computing platform used by the UE and the App instance are generated according to the charging policy and the counted consumption record.
(4) The charging bill is reported to the mobile edge platform manager through the Mm5 interface.

An embodiment of the present invention further provides a storage medium. The storage medium includes a stored program which, when executed, executes:
acquiring a consumption record and charging policy configuration information, where the consumption record includes at least one of: a resource and a service on an MEC platform used by a user terminal on the MEC platform on which the charging service entity is located, or a resource and a service on the MEC platform used by an application instance on the MEC platform on which the charging service entity is located; and
generating a charging bill based on the consumption record and the charging policy configuration information.

The storage medium may include, but is not limited to, a USB flash disk, a ROM, a RAM, a mobile hard disk, a magnetic disk, an optical disk or another medium capable of storing program codes.

An embodiment of the present invention further provides a processor. The processor is configured to execute a program which, when executed, executes:
acquiring a consumption record and charging policy configuration information, where the consumption record includes at least one of: a resource and a service on an MEC platform used by a user terminal on the MEC platform on which the charging service entity is located, or a resource and a service on the MEC platform used by an application instance on the MEC platform on which the charging service entity is located; and
generating a charging bill based on the consumption record and the charging policy configuration information.

Apparently, it should be understood by those skilled in the art that each of the above-mentioned modules or steps of the present invention may be implemented by a general-purpose computing device, the modules or steps may be concentrated on a single computing device or distributed on a network composed of multiple computing devices, and alternatively, the modules or steps may be implemented by program codes executable by the computing devices, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only specific embodiments of the present invention and are not intended to limit the present invention. It is easy for those skilled in the art to conceive modifications or substitutions within the technical scope of the present invention. These modifications or substitutions are within the scope of the present invention. Therefore, the protection scope of the present invention is subject to the scope of the appended claims.

## Claims

1. A bill generation method, comprising:
acquiring, by a charging service entity, a consumption record and charging policy configuration information, wherein the consumption record comprises at least one of: a resource and a service on a mobile edge computing (MEC) platform which are used by a user terminal on the MEC platform on which the charging service entity is located, or a resource and a service on the MEC platform which are used by an application instance on the MEC platform on which the charging service entity is located; and
generating, by the charging service entity, a charging bill based on the consumption record and the charging policy configuration information.

2. The method of claim 1, wherein the charging service entity is located on a mobile edge platform of the MEC platform.

3. The method of claim 1, wherein acquiring, by the charging service entity, the consumption record and the charging policy configuration information comprises:
counting, by the charging service entity, the consumption record; and
acquiring, by the charging service entity, the charging policy configuration information from a mobile edge manager on the MEC platform, wherein the charging policy configuration information comprises at least one of: identification information of the user terminal, identification information of the application instance, a first charging policy for computing a fee corresponding to the resource and the service on the MEC platform which are used by the user terminal, or a second charging policy for computing a fee corresponding to the resource and the service on the MEC platform which are used by the application instance.

4. The method of claim 3, wherein acquiring, by the charging service entity, the charging policy configuration information from the mobile edge manager on the MEC platform comprises:
sending, by the charging service entity, request information for acquiring the charging policy configuration information to the mobile edge manager; and
receiving, by the charging service entity, the charging policy configuration information returned by the mobile edge manager based on the request information.

5. The method of claim 1, wherein after generating, by the charging service entity, the charging bill based on the consumption record and the charging policy configuration information, the method further comprises:
reporting, by the charging service entity, the charging bill to the mobile edge manager on the MEC platform.

6. The method of claim 5, wherein after reporting, by the charging service entity, the charging bill to the mobile edge manager on the MEC platform, the method further comprises:
receiving, by the charging service entity, a charging bill reporting confirmation message returned by the mobile edge manager and used for indicating that the charging service entity has received the charging bill, wherein the charging bill reporting confirmation message carries at least one of following information: identification information of the user terminal, or identification information of the application instance.

7. The method of any one of claims 1 to 6, wherein the resource comprises at least one of: a central processing unit (CPU), a storage space, a lifetime of the application instance, or network traffic; the service comprises at least one of: a number of times for the service being invoked, or a length of time for the service being invoked.

8. The method of any one of claims 1 to 6, wherein in a case where the consumption record comprises the resource and the service used by the user terminal, the charging bill comprises a charging bill for the user terminal; in a case where the consumption record comprises the source and the service used by the application instance, the charging bill comprises a charging bill for the application instance.

9. The method of claim 3 or 4, wherein the first charging policy comprises at least one of: a charging policy for computing a fee corresponding to the service used by the user terminal, or a charging policy for computing a fee corresponding to the resource used by the user terminal;
the second charging policy comprises at least one of: a charging policy for computing a fee corresponding to the service used by the application instance, or a charging policy for computing a fee corresponding to the resource used by the application instance.

10. The method of claim 9, wherein the charging policy for computing the fee corresponding to the resource used by the user terminal comprises at least one of: a charging policy for computing a fee corresponding to a CPU used by the user terminal, a charging policy for computing a fee corresponding to a storage space used by the user terminal, or a charging policy for computing a fee corresponding to network traffic used by the user terminal;
the charging policy for computing the fee corresponding to the resource used by the application instance comprises at least one of: a charging policy for computing a fee corresponding to a CPU used by the user terminal application instance, a charging policy for computing a fee corresponding to a storage space used by the application instance, a charging policy for computing a fee corresponding to network traffic used by the application instance, or a charging policy for computing a fee corresponding to a lifetime of the application instance.

11. A bill generation device, comprising:
an acquisition module, which is configured to acquire a consumption record and charging policy configuration information, wherein the consumption record comprises at least one of: a resource and a service on a mobile edge computing (MEC) platform which are used by a user terminal on the MEC platform on which the charging service entity is located, or a resource and a service on the MEC platform which are used by an application instance on the MEC platform on which the charging service entity is located; and
a generation module, which is configured to generate a charging bill based on the consumption record and the charging policy configuration information.

12. The device of claim 11, wherein the acquisition module is further configured to count the consumption record, and acquire the charging policy configuration information from a mobile edge manager on the MEC platform, wherein the charging policy configuration information comprises at least one of: identification information of the user terminal, identification information of the application instance, a first charging policy for computing a fee corresponding to the resource and the service on the MEC platform which are used by the user terminal, or a second charging policy for computing a fee corresponding to the resource and the service on the MEC platform which are used by the application instance.

13. The device of claim 12, wherein the acquisition module is further configured to send request information for acquiring the charging policy configuration information to the mobile edge manager, and receive the charging policy configuration information returned by the mobile edge manager based on the request information.

14. The device of claim 11, further comprising:
a reporting module, which is configured to report the charging bill to the mobile edge manager on the MEC platform.

15. The device of claim 14, further comprising:
a receiving module, which is configured to receive a charging bill reporting confirmation message returned by the mobile edge manager and used for indicating that the charging service entity has received the charging bill, wherein the charging bill reporting confirmation message carries at least one of following information: identification information of the user terminal, or identification information of the application instance.

16. A mobile edge platform, comprising:
a processor, which is configured to acquire a consumption record and charging policy configuration information, and generate a charging bill based on the consumption record and the charging policy configuration information, wherein the consumption record comprises at least one of: a resource and a service on a mobile edge computing (MEC) platform which are used by a user terminal on the MEC platform on which the charging service entity is located, or a resource and a service on the MEC platform which are used by an application instance on the MEC platform on which the charging service entity is located; and
a memory, which is coupled to the processor and is configured to store a program for bill generation.

17. The mobile edge platform of claim 16, wherein the processor is further configured to count the consumption record, and acquire the charging policy configuration information from a mobile edge manager on the MEC platform, wherein the charging policy configuration information comprises at least one of: identification information of the user terminal, identification information of the application instance, a first charging policy for computing a fee corresponding to the resource and the service on the MEC platform which are used by the user terminal, or a second charging policy for computing a fee corresponding to the resource and the service on the MEC platform which are used by the application instance.

18. The mobile edge platform of claim 17, wherein the processor is further configured to send request information for acquiring the charging policy configuration information to the mobile edge manager; and receive the charging policy configuration information returned by the mobile edge manager based on the request information.

19. The mobile edge platform of claim 16, further comprising:
a reporting module, which is configured to report the charging bill to the mobile edge manager on the MEC platform.

20. The mobile edge platform of claim 19, wherein the processor is further configured to receive a charging bill reporting confirmation message returned by the mobile edge manager and used for indicating that the charging service entity has received the charging bill, wherein the charging bill reporting confirmation message carries at least one of following information: identification information of the user terminal, or identification information of the application instance.

21. A storage medium, comprising a stored program which, when executed, executes the bill generation method of any one of claims 1 to 10.

22. A bill generation device, comprising:
a memory, which is configured to store a program for bill generation; and
a processor, which is configured to execute the program which, when executed, executes the bill generation method of any one of claims 1 to 10.
